# EUROPEAN PATENT APPLICATION

(11) **EP 4 656 041 A1**
(43) Date of publication of application: **03.12.2025**
(21) Application number: 25178741.2
(22) Date of filing: 26.05.2025
(51) Int. Cl.: A01K 39/012, A01K 39/01

(54) **BIRD FEEDER PRESERVING THE VIABILITY OF SEEDS**

(30) Priority: 29.05.2024 IT 202400012313
(71) Applicant: Gruppo Universitario Faunistico Ornitologico ETS, 00196 Roma (IT)
(72) Inventor: MOLLICONE, Danilo, 00196 Roma (IT); CELLETTI, Stefano, 00196 Roma (IT); FEDERICI, Sandro, 00196 Roma (IT); PAPI, Roberto, 00196 Roma (IT); STEFANI, Paolo, 00196 Roma (IT); SBARDELLA, Simone, 00196 Roma (IT); PERRELLA, Paolo, 00196 Roma (IT); LINARDI, Gaetano, 00196 Roma (IT); FABRIZI, Remo, 00196 Roma (IT); ZOMPANTI, Renato, 00196 Roma (IT); GAGLIOPPA, Pierluca, 00196 Roma (IT); TIRONE, Giampiero, 00196 Roma (IT); MARCHI, Giulio, 00196 Roma (IT); MESCHINI, Angelo, 00196 Roma (IT); CAPIZZI, Dario, 00196 Roma (IT); PIERRI, Elena, 00196 Roma (IT); MONTAGNANI, Silvia, 00196 Roma (IT); PETROLINI, Chiara, 00196 Roma (IT); ATTORRE, Fabio, 00196 Roma (IT); MALARA, Giovanni, 00196 Roma (IT)
(74) Representative: Studio Torta S.p.A.

(57) **Abstract**

A bird feeder 1 comprising a loading tank 2, suitable for housing the seeds, a feeding tray 4 connected to a lower end of said loading tank to receive its seeds, and a humidity regulator 5 arranged to close a lower end of the loading tank. The humidity regulator comprises a box-like containment structure, suitable for defining a housing chamber 5d for humidity regulating materials and comprising an upper wall 5c made up of a breathable layer whose upper surface faces the inside of said loading tank.

## Description

### CROSS-REFERENCE TO RELATED APPLICATIONS

This patent application claims priority from Italian patent application no. 102024000012313 filed on May 29, 2024, the entire disclosure of which is incorporated herein by reference.

### TECHNICAL FIELD

This invention relates to a bird feeder.

### STATE OF THE ART

In the IPCC's AR6 Synthesis Report "Climate Change 2023", projections of the rise in the earth's surface temperature were given for the period 2021 to 2100. According to this report, the most optimistic projection predicts a temperature rise of 1.4°C under a very low greenhouse gas emissions scenario, while the most pessimistic projection predicts a temperature rise of 4.4°C under a very high greenhouse gas emissions scenario.

In the temperate zone of the northern hemisphere, a variation of more than 2 degrees Celsius results in an average latitudinal shift of about 1,000 km northwards (at the same altitude) and an altitude shift of more than 400 **m.**

This means that, by 2100, the average temperature in Tuscany and the lower Po Valley will be equivalent to the current average temperature in Sicily, while the average temperature in Normandy will be equivalent to the current average temperature in Camargue.

The most significant changes in Italian vegetation due to rising temperatures could be:
(i) the migration of deciduous broad-leaved trees typical of the Apennines towards the Alps, replacing coniferous forests;
(ii) Mediterranean species would find their thermal optimum in the Po Valley, although such migration remains unlikely due to low forest coverage and its fragmentation;
(iii) a significant reduction in the area devoted to beech forests on the Peninsula, which will be replaced by heat-loving deciduous species of the *Quercus* genus;
(iv) in the Islands, the replacement of deciduous forests with more xeric species typical of North Africa.

Although there are forest ecosystems with a wide distribution in Europe that are able to adapt to different climatic conditions, there is no forest ecosystem that can migrate 1,000 km in less than 80 years.

For a better understanding of the problem outlined above, it is important to specify that forest ecosystems are one of the few real players in the battle to mitigate climate change and that, in the long run, if these ecosystems face significant ecophysiological stresses, they will be doomed to collapse.

Since human beings cannot afford a world without forests, it is crucial to find a solution that ensures the assisted natural migration of forests, so that there will still be viable forest ecosystems in 2100.

The process of forest propagation and regeneration occurs through various mechanisms, but tree species that have heavy seeds, such as acorns, beechnuts, berries and drupes, rely on animals, especially birds, to disperse their seeds.

Every forest ecosystem has its disseminating birds. For example, in boreal forest ecosystems, numerous species of birds are able to scatter seeds from trees and shrubs, such as crossbills (Loxia spp), thrushes (Turdus spp), Northern nutcrackers (Nucifraga caryocatactes), Eurasian jays (Garrulus glandarius) and Eurasian bullfinches (Pirrhula pirrhula), etc.

In light of the above, the inventors of this invention have created an assisted bird dissemination solution for increasing the biodiversity of natural ecosystems, for the restoration of degraded natural environments and for assisted forest migration. This solution is based precisely on the natural predisposition of birds to scatter tree seeds. The solution related to this invention is to mount a special type of bird feeder (seed distributor) on poles, particularly power line poles and pylons, which will be periodically replenished with a seed mix of selected shrub and pioneer tree species. The birds will disperse and spread the seeds in the surrounding areas, allowing the forests to start new processes of natural regeneration with shrubs and trees adapted to the new climatic conditions predicted. This nature-based solution is, in essence, an enhanced strategy of human-assisted bird dispersal.

In particular, areas and power lines that follow the migratory routes of birds, those that penetrate forest areas or those that cross degraded environments will be selected.

Until now, bird feeders have only been developed and designed as tools for feeding birds, changing shape and size according to the species of birds in question. Some feeders are equipped with technical solutions to protect the food from other animals, such as rodents, or from different kinds of weather, such as rain.

### DESCRIPTION OF THE INVENTION

The purpose of this invention is a bird feeder comprising a loading tank, suitable for housing the seeds, and a feeding tray connected to a lower end of said loading tank to receive its seeds; said bird feeder being characterized in that it comprises a humidity regulator arranged to close a lower end of said loading tank; said humidity regulator comprising a box-like containment structure, suitable for defining a housing chamber for humidity regulating materials and comprising an upper wall made up of a breathable layer whose upper surface faces the inside of said loading tank.

In this document, spatial references such as upper, lower, low and high refer to the bird feeder in its position of use as illustrated in the attached figures.

The presence of the humidity regulator ensures that the optimal germination state of the seeds inside the loading tank is maintained. In fact, the seed must be kept in an optimal state of humidity to ensure that, once dispersed by the action of the birds, it can germinate and thus allow new trees to grow for the desired forest regeneration process.

Said humidity regulator is preferably removably attached to the lower end of said loading tank.

Said loading tank is preferably made of a heat-insulating material or is coated on the outside with a heat-insulating material.

Said loading tank preferably comprises a water-repellent inner surface. This will minimise the growth of mould and bacteria within the loading tank and thus ensure that the seeds remain healthy and viable for extended periods.

Said feeding tray is preferably removably attached to the lower end of said loading tank.

A plurality of openings is preferably made in said feeding tray to allow for water drainage.

Said bird feeder preferably comprises reversible means for attaching it to a pole.

This will protect the seeds from rodents or other seed predators that find it difficult to climb poles.

Said bird feeder preferably comprises rodent protection systems, more preferably rat stopper discs for ropes (anchoring on side branch) or protective barriers (anchoring on main trunk).

### BRIEF DESCRIPTION OF THE DRAWINGS

For a better understanding of this invention, a nonlimiting embodiment will now be described purely by way of example, with the help of the accompanying figures, in which:
- Figure 1 is a perspective view of the bird feeder according to this invention;
- Figure 2 is an exploded view of the bird feeder in Figure 1.

### PREFERRED EMBODIMENTS OF THE INVENTION

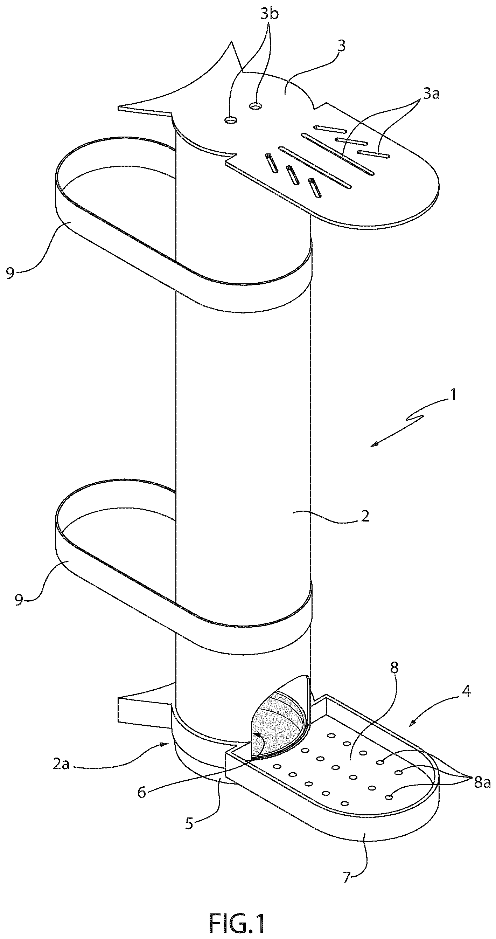

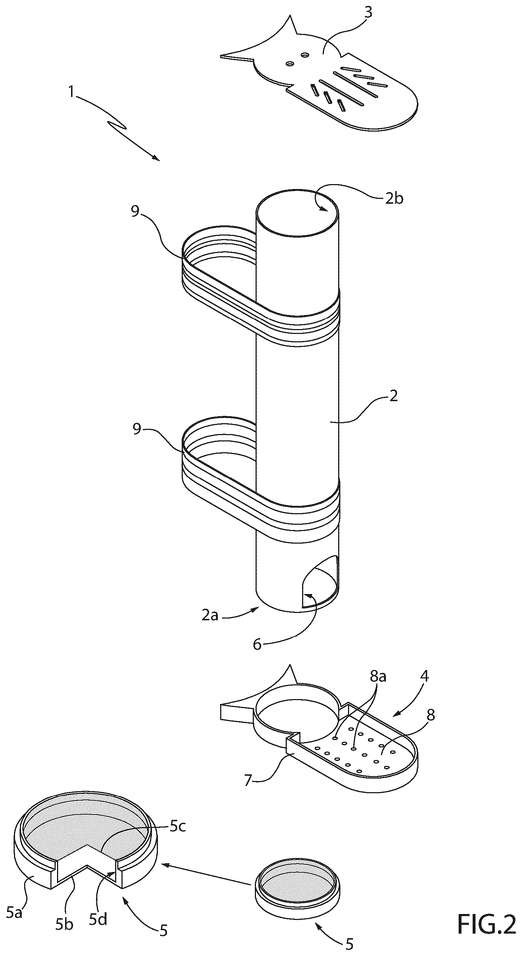

In Figures 1 and 2, reference number 1 denotes a bird feeder, as a whole, according to this invention.

The bird feeder 1 comprises a loading tank 2, a covering element 3 arranged to close the top of the loading tank 2, a feeding tray 4, connected to a lower end 2a of the loading tank 2 to receive the seeds, and a humidity regulator 5 arranged to close the lower end 2a of the loading tank 2.

In the particular embodiment described, the loading tank 2 is made of a PVC cylinder with UNI EN 1401-1 certification. This material prevents the formation of algae and mould. Alternatively, for the same purpose, an inner surface 2b of the loading tank 2 can be coated with a water-repellent layer.

The loading tank 2 has a height of 860 mm and a diameter of 161 mm.

At the feeding tray 4, there is a discharge opening 6 in the wall of the loading tank, which allows the seeds to spill into the feeding tray 4.

The feeding tray 4 consists of an anchoring frame 7 and a plate 8. The anchoring frame 7 is 410 mm wide and is made of polylactic acid (PLA) by means of 3D printing using the FDM (Fused Deposition Modelling) technique. The anchoring frame 7 has the function of connecting the feeding tray 4 to the loading tank 2.

The anchoring frame 7 can also contribute to the reversible fastening of the humidity regulator 5 to the loading tank 2, as well as to anchoring the bird feeder 1 to a pole or tree.

In addition, the anchoring frame 7 can have the function of a perch for landing birds.

The plate 8 has openings 8a that ensure water drainage and is coated with a material that minimises the growth of mould and bacteria.

The function of the covering element 3 is to close the top of the loading tank 2 and to provide a shaded area and protection from rain for the birds.

In the covering element 3, hooks 3a can be made or fixed to anchor a phototrap and possibly a solar panel to power the phototrap.

In addition, one or more openings 3b can be made in the covering element, which will be closed with appropriate plugs, which will be removed if the seeds need moisture for their germination. In fact, this would allow a limited amount of rain to reach the seeds.

The humidity regulator 5 is arranged to close an open lower end of the loading tank 2 to which it is removably attached. The method of removably attaching the humidity regulator 5 to the loading tank 2 is not binding for this invention and may involve simple interlocking as well as the use of snap hooks or a screw coupling.

The humidity regulator 5 is a cylindrical box structure with a height of 30 mm and a diameter of 163 mm. The side wall 5a and bottom wall 5b are made of HDPE, while the upper wall 5c consists of a microporous (hydrophobic) expanded PTFE membrane that allows water vapour to transpire. The upper wall 5c faces the inside of the loading tank 2 and is in contact with the seeds of the lower layer before they flow into the plate 8 through the discharge opening 6.

In use, the humidity regulator can contain a 30 mm thick foam sponge or a 30 mm layer of expanded clay.

From the above, the humidity regulator 5 defines a housing chamber 5d for humidity regulating materials. Depending on the different types of seeds housed in the loading tank 2, the humidity regulating materials can either retain water or absorb moisture. These materials can be natural such as peat, coconut fibre, expanded clay or synthetic such as foam sponges.

In particular, if the seeds require high moisture (e.g. acorns) the humidity regulator should be filled with water before attaching it to the loading tank; if the seeds require low moisture, the humidity regulator should be attached as dry as possible to capture moisture from the loading tank 2.

From the above, it can be seen that the bird feeder according to this invention uses a component capable of regulating seed moisture to keep any type of seed in an optimal state for germination. This component is able to increase or reduce the moisture content of the seed.

Maintaining the germination power of the seed ensures that, once deposited by the bird, it can germinate and give life to a new plant, thus contributing to the sought-after forest repopulation.

The mix of seeds that will be used will depend on the determination of the possible natural forest successions that are best suited to the new climatic conditions predicted in those regions. They will also be prepared according to the presence/absence of specific bird populations.

This nature-based solution aspires to support all the world's natural forest ecosystems by encouraging their adaptation to climate change, from sub-tropical to boreal regions via temperate regions. The first preliminary but crucial result will be to increase the biodiversity of forest ecosystems, making them more resilient to any disturbance.

To be successful and save the forests, it will have to become common to see bird feeders scattered around power lines. Research activities and a new active environmentalism will be the essential pillars for defining the necessary actions.

Forest ecosystems will only be able to adapt to rapid climate change if their natural mechanisms of regeneration, succession and migration become much faster, and this can be achieved by implementing new, original and extensive synergies between humans, birds and trees.

In addition, since the inside of the loading tank 2 is lined with a material that minimises the growth of mould and bacteria, the seeds are guaranteed to remain healthy and viable for extended periods.

Finally, removable anchoring means, such as straps 9, can be mounted on the loading tank 2 to allow the feeder 1 as a whole to be attached to a pole or tree.

In this respect, the pole could be specially designed for the feeder or it could be any existing pole, such as light poles. Rodents find it difficult to climb poles and the high positioning offers protection from rodents and other seed predators.

The fastening mechanism must be secure but non-invasive and allow easy installation on various pole models without causing permanent damage or alteration. If installed on light poles, the feeder must be fastened with certified steel clamps (INOX AISI 304 V2A).

If anchored to a tree, this can be done with a rope fitted with a rat stopper disc if the feeder hangs from a side branch; otherwise, it must be combined with a rodent guard if the feeder is anchored on the main trunk.

## Claims

1. A bird feeder that preserves the viability of the seeds (1) comprising a loading tank (2), suitable for housing the seeds, and a feeding tray (4) connected to a lower end (2a) of said loading tank (2) to receive its seeds; said bird feeder (1) being **characterized in that** it comprises a humidity regulator (5) arranged to close said lower end (2a) of said loading tank (2); said humidity regulator (5) comprising a box-like containment structure, suitable for defining a housing chamber (5d) for humidity regulating materials and comprising an upper wall (5c) made up of a breathable layer whose upper surface faces the inside of said loading tank (2).

2. The bird feeder according to claim 1, **characterized in that** said humidity regulator (5) is removably fixed to the lower end (2a) of said loading tank (2).

3. The bird feeder according to claim 1 or 2, **characterized in that** said loading tank (2) is made of heat-insulating material or is covered externally by a heat-insulating material.

4. The bird feeder according to one of the previous claims, **characterized in that** said loading tank (2) comprises a water-repellent internal surface (2b).

5. The bird feeder according to one of the previous claims, **characterized in that** the said feeding tray (4) is removably fixed to the lower end (2a) of said loading tank (2) .

6. Bird feeder according to one of the previous claims, **characterized in that** a plurality of openings (8a) is provided in said feeding tray (4) to allow water to drain.

7. The bird feeder according to one of the previous claims, **characterized in that** it comprises reversible fixing means (9) suitable for fixing it to a pole or tree.

8. The bird feeder according to one of the previous claims, **characterized in that** it comprises rodent protection systems.
